# EUROPÄISCHE PATENTSCHRIFT

(11) **EP 1 145 908 B1**
(45) Veröffentlichungstag und Bekanntmachung des Hinweises auf die Patenterteilung: **27.07.2005**
(21) Anmeldenummer: 01890112.4
(22) Anmeldetag: 11.04.2001
(51) Int. Cl.: B60R 5/04

(54) **Ladeboden**
Loading platform
Plateau de chargement

(30) Priorität: 11.04.2000 AT 6182000
(43) Veröffentlichungstag der Anmeldung: 17.10.2001
(73) Patentinhaber: Intier Automotive Eybl GmbH, 2435 Ebergassing (AT)
(72) Erfinder: Hahnekamp, Richard, 7000 Eisenstadt (AT); Mitrowitz, Manfred, 7083 Purbach (AT); Vlasits, Roman, 7013 Klingenbach (AT); Pirtzel, Martin, 2486 Landegg (AT)
(74) Vertreter: Vinazzer, Edith, Dipl.-Ing.

(56) Entgegenhaltungen:
- DE-A- 19 815 466
- US-A- 3 006 487
- US-A- 5 944 371

## Beschreibung

Die Erfindung betrifft einen Ladeboden für den Laderaum eines Kraftfahrzeuges, welcher eine den Laderaum abdeckende Platte aufweist und gegenüber dem Laderaum zumindest zum Teil und zumindest im Wesentlichen parallel zum Fahrzeugboden aus- und einfahrbar ist.

Bei den meisten Kraftfahrzeugen wird der Ladeboden lediglich von einer Platte gebildet, die den Boden des heckseitigen Laderaums des Kraftfahrzeuges abdeckt. Der Zugang zum Raum unterhalb des Ladebodens, wo meist noch Aufbewahrungsraum für Werkzeug oder für das Reserverad vorgesehen ist, kann durch ein Hochklappen des Ladebodens ermöglicht werden. Das Beladen derartiger Laderäume ist mühsam und kraftaufwändig, wenn schwere Ladegüter über die oft relativ hohe Ladekante im Heckbereich des Kraftfahrzeuges in den Laderaum hineingehievt werden müssen. Auch das Verstauen großvolumiger und sperrigerer Güter gestaltet sich oft schwierig.

Es ist nun auch bereits bekannt, Ladeböden für den Laderaum eines Kraftfahrzeuges so auszugestalten und zu lagern, dass sie parallel zum Fahrzeugboden aus dem Laderaum ausfahrbar und wieder einfahrbar sind. Eine derartige Lösung ist beispielsweise aus der AT-B-404 459 bekannt. Der Ladeboden wird dabei auf Rollen gelagert, wobei an den Seitenrändern der am Ladeboden vorgesehenen Platte Z-förmige Profile befestigt sind, welche die Lauffläche für fahrzeugfest angeordnete Rollen bilden. Ein derartiger von Hand aus ein- und ausfahrbarer Ladeboden erleichtert zwar das Be- und Entladen des Laderaums, ist jedoch mit dem Nachteil verbunden, dass durch die Höhe der Ladekante Laderaumvolumen verschenkt wird. Ein gewisser Komfort zum Be- und Entladen ist daher meist mit einem nicht unerheblichen Verlust an Laderaumvolumen verbunden. Es hat sich darüber hinaus herausgestellt, dass die Belastbarkeit der bekannten Lösung oft zu gering ist, da durch die Art der Lagerung nur die wenig belastbare Platte ausfährt.

Aus der DE 198 15 466 A1 sind verschiedene Ausführungen eines Ladebodens für den Laderaum eines Kraftfahrzeuges bekannt, welcher eine Ladeplatte aufweist, die manuell aus einer Transportposition, in der die Ladeplatte vollständig im Kofferraum aufgenommen ist, in eine Be- und Entladeposition bewegbar ist, in der die Ladeplatte zum Teil aus dem Kofferraum vorsteht. Der Ladeboden weist ein Unterteil zum Abstützen auf dem Boden des Kofferraums sowie ein die Ladeplatte aufweisendes Oberteil auf. Zwischen dem Unterteil und dem Oberteil ist eine Getriebe- oder Führungsanordnung wirksam, mit welcher die Ladeplatte zumindest an ihrem einen Ende geführt angehoben werden kann. Die zumindest eine Hebelanordnung aufweisende Getriebe- oder Führungseinrichtung bewirkt gleichzeitig ein Hochschwenken und Ausfahren der Ladeplatte.

Hier setzt nun die Erfindung ein, der die Aufgabe zu Grunde liegt, einen ein- und ausfahrbaren Ladeboden so auszugestalten, dass kein Laderaumvolumen verloren geht, dass seine Belastbarkeit wesentlich höher ist und dass eine sehr komfortable Betätigung zum Ein- und Ausfahren möglich ist.

Gelöst wird die gestellte Aufgabe erfindungsgemäß dadurch, dass die Platte auf einem ersten oberen Rahmen angeordnet ist, welcher relativ zu einem zweiten unteren Rahmen verschiebbar gelagert ist, wobei die beiden Rahmen in unverschobener Position in vertikaler Richtung gemeinsam anhebbar und absenkbar sind, wobei in der gemeinsam angehobenen Position der obere Rahmen gegenüber dem unteren Rahmen in horizontaler Richtung zum Ein- und Ausfahren des oberen Rahmens verschiebbar ist, und wobei sämtliche Bewegungen der Rahmen über Elektromotoren durchführbar sind.

Durch die Anordnung der Platte auf einem Rahmen kann der Ladeboden mit einer wesentlich höheren Belastbarkeit und Steifigkeit ausgelegt werden als bei der bekannten Lösung. Durch die sowohl in vertikaler als auch in horizontaler Richtung möglichen Bewegungen wird wenig Bauraum benötigt und es wird somit auch das Laderaumvolumen im eingeführten Zustand nicht verringert. Ein erfindungsgemäß ausgeführter Ladeboden kann ferner auf eine optisch einwandfreie Weise im Fahrzeug integriert werden. Die automatische Betätigung stellt einen hohen Bedienungskomfort sicher.

Erfindungsgemäß kann der untere Rahmen auf einfache Weise mittels fahrzeugsfest abgestützter Hubvorrichtungen anhebbar und absenkbar sein (Anspruch 2).

Eine besonders funktionssichere und zuverlässig arbeitende Ausführungsvariante der Erfindung sieht vor, dass die Hubvorrichtungen Schneckenhubgetriebe sind, die mit Gelenkwellen verbunden sind, die von einem der Elektromotoren antreibbar sind (Anspruch 3).

Auch die verschiebbare Lagerung des oberen Rahmens gegenüber dem unteren Rahmen kann auf sehr einfache Weise, nämlich über eine Schubeinrichtung, erfolgen (Anspruch 4).

Um möglichst wenig Laderaum zu verlieren, ist es von Vorteil, wenn die Bauhöhe des Ladebodens möglichst gering gehalten wird. In diesem Zusammenhang ist es daher auch günstig, wenn die Schubeinrichtung wenig Platz benötigt, indem sie eine am unteren Rahmen gelagerte Vorschubspindel aufweist (Anspruch 5).

Die Wirkverbindung der Schubeinrichtung zum oberen Rahmen kann auf einfache Weise über ein mit dem oberen Rahmen verbundenes Teil erfolgen, welches mit der mit der Vorschubspindel in Eingriff stehenden Spindelmutter verbunden ist (Ansprüche 6 und 7).

Die automatische Betätigung der Schubeinrichtung wird auf zuverlässige Weise durch einen Antrieb der Vorschubspindel mittels des zweiten Elektromotors sichergestellt (Anspruch 8).

Die Relativbewegung des unteren Rahmens relativ zum oberen Rahmen soll möglichst reibungsarm erfolgen können. Dazu ist es von Vorteil, wenn auf dem unteren Rahmen Gleitlager für Wellen oder dergleichen, die mit dem oberen Rahmen verbunden sind, vorgesehen sind (Anspruch 9).

Neben geringen Reibungsverlusten ist auch bei der Lagerung des oberen Rahmens eine geringe Bauhöhe von Vorteil und von Bedeutung. Bei einer Ausführungsvariante der Erfindung ist daher vorgesehen, dass die Gleitlager Linearkugellager sind, die in auf dem oberen Rahmen befestigten Lineargehäusen eingebettet sind (Anspruch 10).

Die Verbindung der Wellen zu den seitlichen Rahmenteilen des oberen Rahmens kann auf einfache Weise über Wellenunterstützungen, die auf den Wellen und dem oberen Rahmen befestigt sind, erfolgen (Anspruch 11).

Eine funktionssichere Lagerung der Vorschubspindel wird beispielsweise dadurch durchgeführt, dass diese an der Unterseite des unteren Rahmens in zumindest einem Gleitlagerhalter und in zumindest einem Spindellager gelagert ist (Anspruch 12).

Eine funktionssichere Lagerung der Vorschubspindel wird beispielsweise dadurch durchgeführt, dass diese an der Unterseite des unteren Rahmens in zumindest einem Gleitlagerhalter und in zumindest einem Spindellager gelagert ist (Anspruch 12).

Zum Anheben des Ladebodens sind drei oder mehr mit dem unteren Rahmen in Verbindung stehende Schneckenhubgetriebe vorgesehen (Anspruch 13). Bei entsprechender Positionierung der Hubgetriebe können bereits drei für eine einwandfreie Betätigung des Ladebodens durchaus ausreichend sein.

Der untere Rahmen kann mit geringem Gewicht und mit ausreichender Stabilität ausgeführt werden, indem er aus insbesondere U-förmigen Profilen zusammengesetzt wird (Anspruch 14).

Der obere Rahmen wird aus Gründen der Belastbarkeit und Stabilität insbesondere ein Blechstanzteil oder dergleichen sein, welcher mittig mit einem Durchbruch versehen sein kann (Anspruch 15). Über den mittigen Durchbruch kann ein Zugang zu den im bzw. unterhalb des Ladebodens untergebrachten Gegenständen, beispielsweise dem Reserverad, erfolgen.

Um diesen Zugang zu ermöglichen, ist vorgesehen, dass die Platte am vorderen Randbereich des oberen Rahmens schwenkbar angebracht ist (Anspruch 16).

Im Falle eines Heckzusammenstoßes soll ferner sichergestellt sein, dass Teile des Ladebodens nicht in den Fahrgastraum hinein geschoben werden können. Es ist daher vorgesehen, dass die Platte und der obere Rahmen an übereinstimmenden Stellen mit in Fahrzeugquerrichtung verlaufenden Sollknickstellen versehen sind (Anspruch 17).

Weitere Merkmale, Vorteile und Einzelheiten der Erfindung werden nun anhand der Zeichnung, die schematisch ein Ausführungsbeispiel der Erfindung darstellt, näher beschrieben. Dabei zeigen
- Fig. 1: eine Seitenansicht der Bestandteile des Ladebodens in Ruhelage,
- Fig. 2: eine Vorderansicht des Ladebodens ebenfalls in Ruhelage,

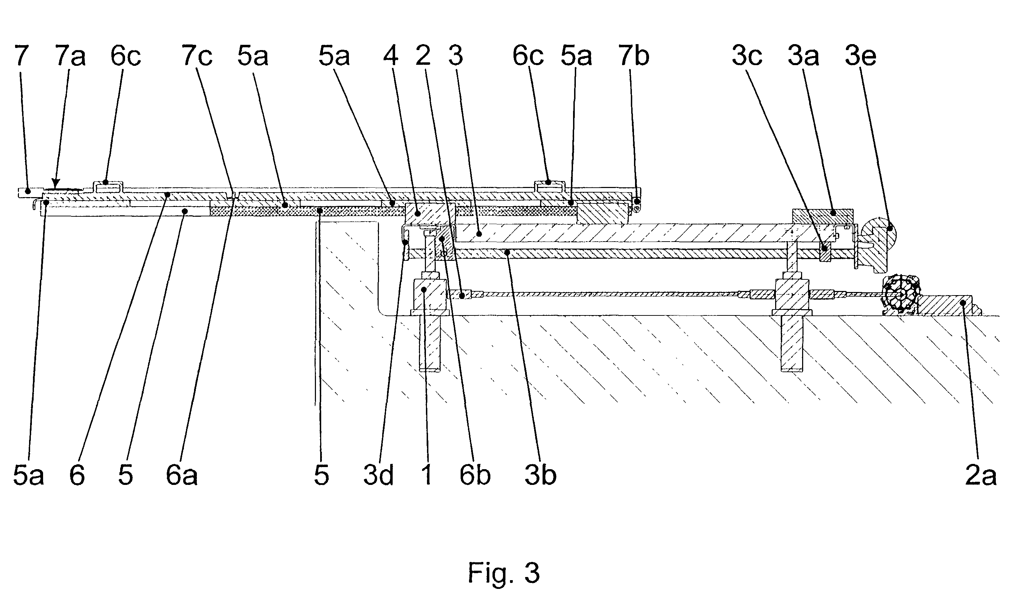

- Fig. 3: in einer zu Fig. 1 analogen Darstellung die Bestandteile des Ladebodens, jedoch in komplett ausgefahrener Lage und
- Fig. 4: in einer zu Fig. 1 analogen Darstellung den Ladeboden mit aufgeklappter Platte.

Vorab wird darauf verwiesen, dass die einzelnen dargestellten Bestandteile zur Erleichterung des Verständnisses mit unterschiedlicher Schraffur versehen sind, obwohl es sich um Ansichten und nicht um Schnitte handelt. In der nachfolgenden Beschreibung beziehen sich die Bezeichnungen "vorne" und "rückwärtig" bzw. "vorderer Bereich" und "rückwärtiger Bereich" auf das Kraftfahrzeug, "Längsrichtung" bedeutet in Richtung der Fahrzeuglängsachse und "Querrichtung" bedeutet in Fahrzeugquerrichtung.

Unter dem Begriff Ladeboden wird im Rahmen der gegenständlichen Erfindung ferner die gesamte, den rückwärtigen Laderaum des Fahrzeuges abdeckende Vorrichtung verstanden.

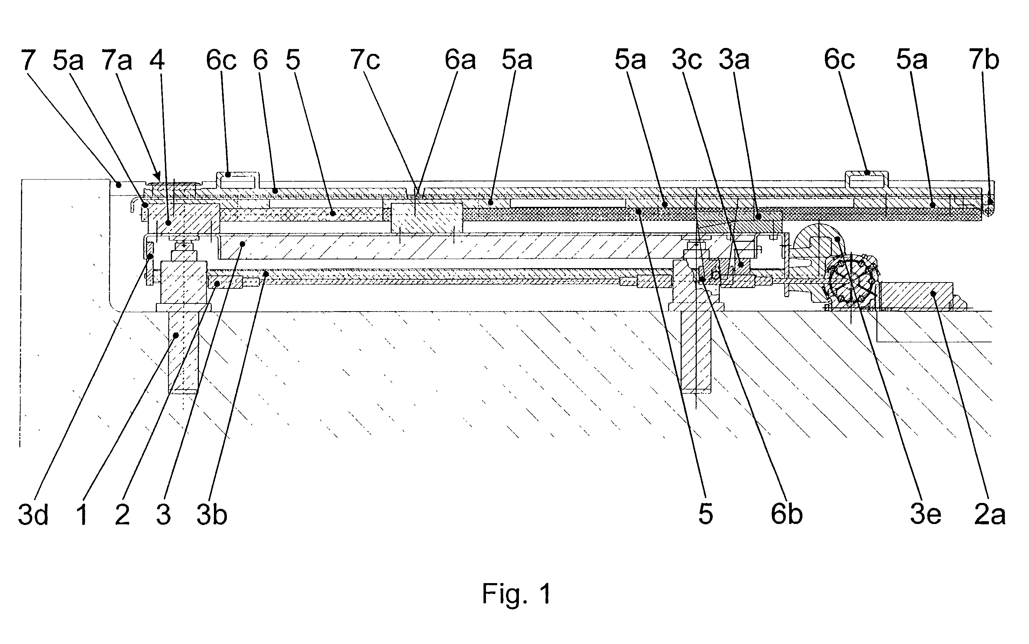

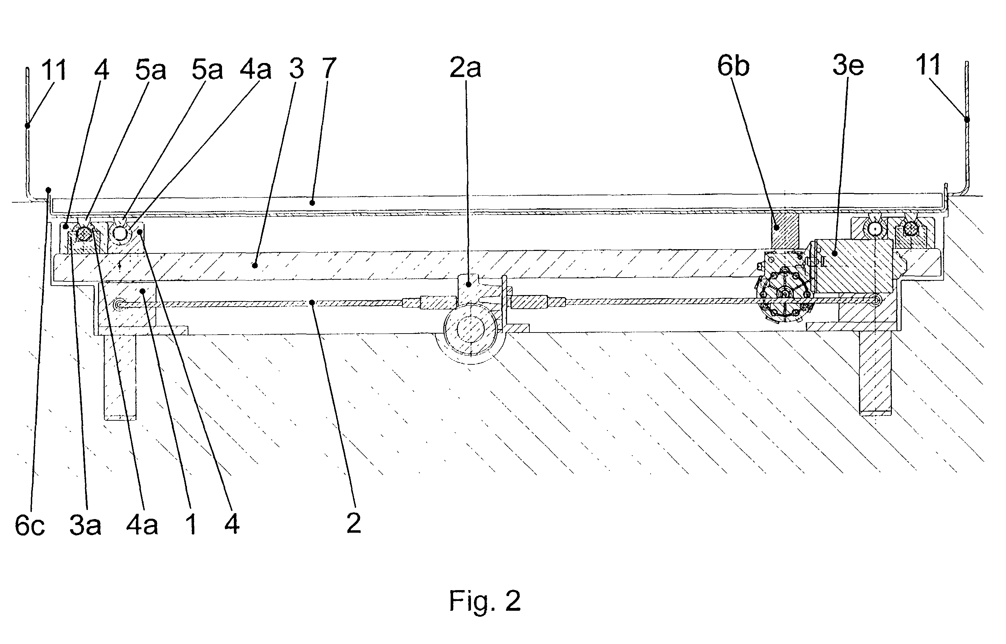

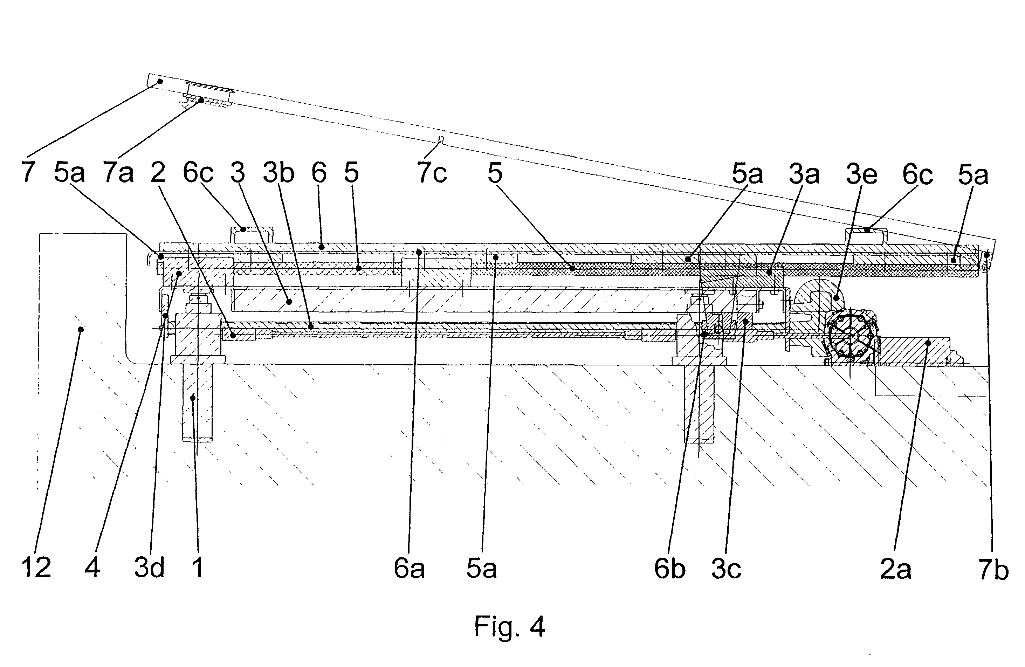

Wie aus den Zeichnungsfiguren ersichtlich ist, wird der im Laderaum sichtbare Bestandteil des Ladebodens durch eine Platte 7 gebildet, die beispielsweise eine kaschierte Kunststoff- oder Schichtholzplatte sein kann. Wie Fig. 2 zeigt schließen seitlich der Platte 7 die beiden Laderaumverkleidungen 11 an. Am rückwärtigen Rand der Platte 7 befindet sich die Ladekante 12 des Heckbereiches des Kraftfahrzeuges (siehe Fig. 1), am vorderen Rand schließen die Sitzlehnen der rückwärtigen Sitze an. Die insbesondere rechteckförmige Platte 7 ist auf einem oberen Rahmen 6 gelagert, welcher hier ein Blechstanzteil ist und mittig mit einem großen, hier nicht dargestellten Durchbruch versehen sein kann, sodass im Bereich des Ladebodens unterhalb der Platte 7 untergebrachte Gegenstände, beispielsweise das Reserverad, zugänglich sind. Der an die Form der Platte 7 angepasste obere Rahmen 6 ist zumindest im Wesentlichen rechteckförmig gestaltet und ist an seinen beiden oberen Längskanten mit mitgestanzten Haltelaschen 6c versehen, die die Platte 7 seitlich überragen und dazu vorgesehen sind, Festhaltegurte für Ladegut zu befestigen. Die Platte 7 ist an ihrem vorderen Randbereich mittels Scharnieren 7b am vorderen Rand des Rahmens 6 schwenkbar gelagert. Im rückwärtigen Bereich der Platte 7 sind an ihrer Unterseite Plattenhalter 7a befestigt, die insbesondere aus Fig. 4 ersichtlich sind und die jeweils über einen beweglich gelagerten Riegel verfügen, mittels welchem die Platte 7 am oberen Rahmen 6 lösbar eingerastet werden kann. Ein Lösen der Plattenhalter 7a wird dann erfolgen, wenn die Platte 7, beispielsweise um Zugang zum Reserverad zu erhalten, hochgeklappt werden soll.

Im vorderen und im rückwärtigen Bereich des Laderaums sind als die am weitesten unten positionierte Bestandteile des erfindungsgemäßen Ladebodens an der Fahrzeugkarosserie jeweils zwei Schneckenhubgetriebe 1 befestigt, insbesondere angeschraubt. Fig. 1 zeigt dabei je eines der vorderen und eines der rückwärtigen Schneckenhubgetriebe 1, aus Fig. 2 sind die beiden rückwärtig angeordneten Schneckenhubgetriebe 1 ersichtlich. Biegsame Gelenkwellen 2 verbinden an jeder Seite ein rückwärtiges mit einem vorderen Schneckenhubgetriebe 1 und diese mit einem Elektromotor 2a, der beispielsweise ein 12 V-Motor ist und ebenfalls an der Fahrzeugkarosserie, hier zwischen den beiden vorderen Schneckenhubgetrieben 1, befestigt ist. Die biegsamen Gelenkwellen 2 werden über den Motor 2a zur Betätigung der Schneckenhubgetriebe 1 angetrieben.

Die Schneckenhubgetriebe 1 sind zum vertikalen Auf- und Abbewegen eines unteren Rahmens 3 vorgesehen, der auf den in vertikaler Richtung bewegbaren Teilen der Schneckenhubgetriebe 1 montiert ist. Der untere Rahmen 3 ist insbesondere ein Rechteckrahmen, der aus U-förmigen Profilen zusammengesetzt sein kann. Auf der Oberseite des unteren Rahmens 3 sind an den vorderen Bereichen der beiden seitlichen Rahmenteile je eine nutartige Aufnahme aufweisende Auffahrrampen 3a, insbesondere aus Kunststoff, montiert, wo im eingefahrenen Zustand, im Ruhezustand, jeweils eine Welle 5, auf die später noch eingegangen wird, eingefahren und abgestüzt ist.

Der obere Rahmen 6 ist gemeinsam mit dem unteren Rahmen 3 in vertikaler Richtung bewegbar und gegenüber dem unteren Rahmen 3 auch in horizontaler Richtung nach rückwärts und somit aus dem Heckbereich des Fahrzeuges heraus bewegbar.

Die für die Relativbewegung des oberen Rahmen 6 zum unteren Rahmen 3 vorgesehenen Bauteile umfassen eine unterhalb eines der seitlichen Rahmenteile am unteren Rahmen 3 gelagerte Vorschubspindel 3b, die mit einer Spindelmutter eines Verbindungsteils 6b, der am oberen Rahmen 6 montiert ist, in Eingriff steht und derart die Wirkverbindung des oberen Rahmens 6 zum unteren Rahmen 3 herstellt. Die Vorschubspindel 3b, die bei einer Betätigung des Ladebodens gegenüber dem unteren Rahmen 3 ortsfest verbleibt, ist im vorderen Endbereich in einem ebenfalls am unteren Rahmen 3 befestigten Gleitlagerhalter 3c und mit ihrem rückwärtigen Endbereich in einem am unteren Rahmen 3 befestigten Spindellager 3d gelagert. Das vordere Ende der Vorschubspindel 3b ist an einen weiteren Elektromotor 3e, der ebenfalls ein 12 V-Motor ist, gekoppelt, welcher bei der dargestellten Ausführungsform am unteren Rahmen 3 befestigt ist. Der Motor 3e ist für einen Antrieb der Vorschubspindel 3b und somit für eine Aus- und Einfahrbewegung des Ladebodens verantwortlich.

Auf der Oberseite der in Fahrzeuglängsrichtung verlaufenden seitlichen Rahmenteile des unteren Rahmens 3 sind ferner je zwei Lineargehäuse 4 in einem Abstand voneinander befestigt, in welchen jeweils eine Anzahl von Linearkugellagern 4a enthalten sind. An jeder Seite ist in den Linearkugellagern 4a jedes Lineargehäuses 4 eine Welle 5 gleitbeweglich gelagert.

Die beiden Lineargehäuse 4 auf jeder Rahmenseite sind auch in Querrichtung jeweils gegeneinander versetzt, sodass jeweils eine der Wellen 5 in einem der Lineargehäuse 4 gelagert ist. Die beiden paarweise angeordneten Wellen 5 sind insbesondere gleich lang, aber kürzer als die Länge der Platte 7, wobei die eine Welle 5 bis zum rückwärtigen und die andere Welle 5 bis zum vorderen Ende der Platte 7 verläuft.

An jedem der Endbereiche jeder Welle 5 ist eine Wellenunterstützung 5a montiert. Auf den Wellenunterstützungen 5a ist der obere Rahmen 6 befestigt.

Die Funktionsweise des erfindungsgemäßen Ladebodens zum Ein- und Ausfahren ist wie folgt. Bei geöffneter Heckklappe, die in den Zeichnungsfiguren nicht dargestellt ist, kann ein innen am Fahrzeug an leicht zugänglicher Stelle eingebauter Schalter oder dergleichen betätigt werden. Eine nicht Gegenstand der vorliegenden Erfindung bildende Elektronik veranlasst nun ein entsprechendes Ansteuern der beiden Elektromotoren 2a, 3e. Über den Elektromotor 2a werden vorerst die Gelenkwellen 2 der Schneckenhubgetriebe 1 betätigt, sodass der untere Rahmen 3 mitsamt allen weiteren auf ihm angeordneten Bauteilen in vertikaler Richtung gehoben wird. Die Anhebebewegung wird insbesondere automatisch gestoppt, sobald die ausfahrbaren Teile des Ladebodens, dies sind insbesondere die Platte 7 mit dem oberen Rahmen 6 und die mit der Platte 7 über die Wellenunterstützungen 5a verbundenen Wellen 5, über die Ladekante 12 bewegbar sind. Nun geht der zweite Motor 3e in Betrieb, welcher die Vorschubspindel 3b in Drehung versetzt, wodurch das am oberen Rahmen 6 befestigte und die Spindelmutter aufweisende Verbindungsteil 6b auf der Vorschubspindel 3b nach rückwärts wandert. Damit wird zwangsweise der gesamte obere Rahmen 6 mitsamt der Platte 7 und den Wellen 5 aus dem Heckbereich des Fahrzeuges heraus bewegt. Dabei gleiten die Wellen 5 in den Linearkugellagern 4a der Lineargehäuse 4, die auf dem unteren Rahmen 3 angeordnet sind. Die Ausfahrbewegung wird spätestens beim Erreichen der maximal möglichen Lage automatisch unter Stoppen des Motors 3c beendet. Selbstverständlich kann schon vorher über den Schalter ein Beenden der Ausfahrbewegung erfolgen. In der ausgefahrenen Position kann der Ladeboden auf sehr einfache Weise mit Ladegut beladen werden. Anschließend kann über ein Betätigen des Schalters wieder ein Einfahren des Ladebodens und ein vertikales Absenken des Ladebodens erfolgen.

Wie aus den Zeichnungsfiguren, insbesondere aus Fig. 1 und Fig. 4 ersichtlich ist, ist ferner an der Unterseite des oberen Rahmens 6 eine definierte, quer zur Fahrtrichtung verlaufende Sicke 6a vorgesehen, die bei der Herstellung des Rahmens 6 mitgestanzt sein kann. Hier ist daher der oberen Rahmen 6 in Querrichtung mit einer Sollknickstelle versehen. An der Unterseite der Platte 7 wird an übereinstimmender Stelle zur Sicke 6a eine Einfräsung 7c vorgenommen. Somit ist sichergestellt, dass im Falle eines Auffahrunfalles im Heckbereich ein gezieltes Knicken bzw. Falten der Platte 7 und des oberen Rahmens 6 stattfindet und diese Teile nicht in den Fahrgastraum geschoben werden können.

Zusätzlich kann vorgesehen werden, einen Aufhaltemechanismus, beispielsweise an der Platte 7 und am oberen Rahmen 6, vorzusehen, sodass die Platte 7 in ihrer hochgeschwenkten Lage, beispielsweise zur Entnahme des Reserverades, lösbar fixiert werden kann.

Die Erfindung ist auf das dargestellte Ausführungsbeispiel nicht eingeschränkt. So ist es insbesondere möglich, die beiden Elektromotoren an anderer Stelle als dargestellt unterzubringen. Es ist ferner möglich, an Stelle von vier Schneckenhubgetrieben drei vorzusehen, von welchen zwei im rückwärtigen Bereich an der Fahrzeugkarosserie und eine etwa mittig im vorderen Bereich befestigt wird. An Stelle der Schneckenhubgetriebe und der Vorschubspindel können andere Hub- und Schubeinrichtungen verwendet werden. Grundsätzlich können auch andere Bauteile des Ladebodens durch gleich oder ähnlich wirkende ersetzt werden.

## Patentansprüche

1. Ladeboden für den Laderaum eines Kraftfahrzeuges, welcher eine den Laderaum abdeckenden Platte aufweist und gegenüber dem Laderaum zumindest zum Teil und zumindest im Wesentlichen parallel zum Fahrzeugboden aus- und einfahrbar ist,
**dadurch gekennzeichnet,**
**dass** die Platte (7) auf einem ersten oberen Rahmen (6) angeordnet ist, welcher relativ zu einem zweiten unteren Rahmen (3) verschiebbar gelagert ist, wobei die beiden Rahmen (3, 6) in unverschobener Position in vertikaler Richtung gemeinsam anhebbar und absenkbar sind, wobei in der gemeinsam angehobenen Position der obere Rahmen (6) gegenüber dem unteren Rahmen (3) in horizontaler Richtung zum Ein- und Ausfahren des oberen Rahmens (6) verschiebbar ist, und wobei sämtliche Bewegungen der Rahmen (3, 6) über Elektromotoren (2a, 3a) durchführbar sind.

2. Ladeboden nach Anspruch 1, **dadurch gekennzeichnet, dass** der untere Rahmen (3) mittels fahrzeugfest abgestützter Hubvorrichtungen (1) anhebbar und absenkbar ist.

3. Ladeboden nach Anspruch 2, **dadurch gekennzeichnet, dass** die Hubvorrichtungen Schneckenhubgetriebe (1) sind, die mit Gelenkwellen (2) verbunden sind, die von einem der Elektromotoren (2a) antreibbar sind.

4. Ladeboden nach einem der Ansprüche 1 bis 3, **dadurch gekennzeichnet, dass** der obere Rahmen (6) gegenüber dem unteren Rahmen (3) über eine Schubeinrichtung verschiebbar ist.

5. Ladeboden nach Anspruch 4, **dadurch gekennzeichnet, dass** die Schubeinrichtung zumindest eine am unteren Rahmen (3) gelagerte Vorschubspindel (3b) aufweist.

6. Ladeboden nach Anspruch 4 oder 5, **dadurch gekennzeichnet, dass** die Schubeinrichtung mit einem mit dem oberen Rahmen (6) verbundenen Teil in Wirkverbindung ist.

7. Ladeboden nach Anspruch 6, **dadurch gekennzeichnet, dass** das am oberen Rahmen (6) befestigte Teil ein Verbindungsteil (6b) mit einer Spindelmutter ist.

8. Ladeboden nach einem der Ansprüche 4 bis 7, **dadurch gekennzeichnet, dass** die Schubeinrichtung von einem der Elektromotoren (3a) antreibbar ist.

9. Ladeboden nach einem der Ansprüche 1 bis 8, **dadurch gekennzeichnet, dass** auf dem unteren Rahmen (3) Gleitlager für Wellen (5) oder dergleichen, die mit dem oberen Rahmen (6) verbunden sind, vorgesehen sind.

10. Ladeboden nach Anspruch 9, **dadurch gekennzeichnet, dass** die Gleitlager Linearkugellager (4a) sind, die in auf dem oberen Rahmen (6) befestigten Lineargehäusen (4) eingebettet sind.

11. Ladeboden nach einem der Ansprüche 1 bis 10, **dadurch gekennzeichnet, dass** an der Unterseite der seitlichen Rahmenteile des oberen Rahmens (6) je zwei Wellen (5), insbesondere über Wellenunterstützungen (5a) oder dergleichen, befestigt sind.

12. Ladeboden nach einem der Ansprüche 5 bis 11, **dadurch gekennzeichnet, dass** die Vorschubspindel (3b) an der Unterseite des unteren Rahmens (3) in zumindest einem Gleitlagerhalter (3c) und zumindest einem Spindellager (3d) gelagert ist.

13. Ladeboden nach einem der Ansprüche 1 bis 12, **dadurch gekennzeichnet, dass** zumindest drei mit dem unteren Rahmen (3) verbundene Schneckenhubgetriebe (1) vorgesehen sind.

14. Ladeboden nach einem der Ansprüche 1 bis 13, **dadurch gekennzeichnet, dass** der untere Rahmen (3) aus insbesondere U-förmigen Profilen zusammengesetzt ist.

15. Ladeboden nach einem der Ansprüche 1 bis 14, **dadurch gekennzeichnet, dass** der obere Rahmen (6) ein Blechstanzteil oder dergleichen ist, welcher vorzugsweise mit einem Durchbruch versehen ist.

16. Ladeboden nach einem der Ansprüche 1 bis 15, **dadurch gekennzeichnet, dass** die Platte (7) am vorderen Randbereich des oberen Rahmens (6) schwenkbar gelagert ist.

17. Ladeboden nach einem der Ansprüche 1 bis 16, **dadurch gekennzeichnet, dass** die Platte (7) und der obere Rahmen (6) an übereinstimmenden Stellen mit in Fahrzeugquerrichtung verlaufenden Sollknickstellen versehen sind.

## Claims

1. A loading floor for the loading space of a motor-vehicle, which has a plate covering the loading space and can be withdrawn and inserted with respect to the loading space at least partially and at least essentially parallel to the vehicle floor,
**characterised in that**
the plate (7) is arranged on a first upper frame (6), which is mounted so as to be displaceable relative to a second lower frame (3), whereby the two frames (3, 6), in the undisplaced position in the vertical direction, can be jointly raised and lowered, whereby in the jointly raised position the upper frame (6) is displaceable with respect to the lower frame (3) in the horizontal direction for the purpose of insertion and withdrawal of the upper frame (6), and whereby all the movements of the frames (3, 6) can be carried out by means of electric motors (2a, 3a).

2. The loading floor according to claim 1, **characterised in that** the lower frame (3) can be raised and lowered by means of lifting devices (1) supported in a fixed manner on the vehicle.

3. The loading floor according to claim 2, **characterised in that** the lifting devices are worm lifting gears (1) which are connected to articulated shafts (2), which can be driven by one of the electric motors (2a).

4. The loading floor according to any one of claims 1 to 3, **characterised in that** the upper frame (6) is displaceable with respect to the lower frame (3) by means of a pushing device.

5. The loading floor according to claim 4, **characterised in that** the pushing device has at least one feed screw (3b) mounted on the lower frame (3).

6. The loading floor according to claim 4 or 5, **characterised in that** the pushing device is in active connection with a part connected to the upper frame (6).

7. The loading floor according to claim 6, **characterised in that** the part fixed to the upper frame (6) is a connecting part (6b) with a spindle nut.

8. The loading floor according to any one of claims 4 to 7, **characterised in that** the pushing device can be driven by one of the electric motors (3a).

9. The loading floor according to any one of claims 1 to 8, **characterised in that** sliding bearings for shafts (5) or suchlike, which are connected to the upper frame (6), are provided on the lower frame (3).

10. The loading floor according to claim 9, **characterised in that** the sliding bearings are linear ball bearings (4a), which are embedded in linear housings fixed on the upper frame (6).

11. The loading floor according to any one of claims 1 to 10, **characterised in that** two shafts (5) are fixed in each case at the underside of the lateral frame parts of the upper frame (6), in particular by means of shaft supports (5a) or suchlike.

12. The loading floor according to any one of claims 5 to 11, **characterised in that** the feed screw (3b) is mounted at the underside of the lower frame (3) in at least one sliding-bearing holder (3c) and at least one spindle bearing (3d).

13. The loading floor according to any one of claims 1 to 12, **characterised in that** at least three worm lifting gears (1) connected to the lower frame (3) are provided.

14. The loading floor according to any one of claims 1 to 13, **characterised in that** the lower frame (3) comprises, in particular, U-shaped profiles.

15. The loading floor according to any one of claims 1 to 14, **characterised in that** the upper frame (6) is a stamped sheet metal part or suchlike, which is preferably provided with a perforation.

16. The loading floor according to any one of claims 1 to 15, **characterised in that** the plate (7) is mounted in a swivelling manner at the front edge region of the upper frame (6).

17. The loading floor according to any one of claims 1 to 16, **characterised in that** the plate (7) and the upper frame (6) are provided at corresponding points with predetermined buckling points running in the transverse direction of the vehicle.

## Revendications

1. Plancher de chargement pour le compartiment de charge d'un véhicule automobile, qui présente une plaque recouvrant le compartiment de charge et peut être sorti et rentré par rapport au compartiment de charge du moins partiellement et du moins sensiblement parallèlement au plancher du véhicule,
**caractérisé en ce que**
la plaque (7) est disposée sur un premier châssis supérieur (6) qui s'appuie de manière mobile par rapport à un deuxième châssis inférieur (3), les deux châssis (3, 6) pouvant, en position non décalée, être montés et descendus ensemble dans le sens vertical, tandis que, dans la position où ils sont montés ensemble, le châssis supérieur (6) est déplaçable par rapport au châssis inférieur (3) dans le sens horizontal pour rentrer et sortir le châssis supérieur (5) et que tous les mouvements des châssis (3, 6) peuvent être exécutés à l'aide de moteurs électriques (2a, 3a).

2. Plancher de chargement selon la revendication 1, **caractérisé en ce que** le châssis inférieur (3) peut être monté et descendu au moyen de dispositifs de levage (1) s'appuyant fixement sur le véhicule.

3. Plancher de chargement selon la revendication 2, **caractérisé en ce que** les dispositifs de levage sont des engrenages à vis sans fin (1) qui sont reliés à des arbres articulés (2) qui peuvent être entraînés par un des moteurs électriques (2a).

4. Plancher de chargement selon une des revendications 1 à 3, **caractérisé en ce que** le châssis supérieur (6) est déplaçable par rapport au châssis inférieur (3) à l'aide d'un dispositif de poussée.

5. Plancher de chargement selon la revendication 4, **caractérisé en ce que** le dispositif de poussée présente au moins un mandrin d'avance (3b) s'appuyant sur le châssis inférieur (3).

6. Plancher de chargement selon la revendication 4 ou 5, **caractérisé en ce que** le dispositif de poussée est en liaison fonctionnelle avec une pièce reliée au châssis supérieur (6).

7. Plancher de chargement selon la revendication 6, **caractérisé en ce que** la pièce fixée au châssis supérieur (6) est une pièce de connexion (6b) comportant un écrou de broche.

8. Plancher de chargement selon une des revendications 4 à 7, **caractérisé en ce que** le dispositif de poussée peut être entraîné par un des moteurs électriques (3a).

9. Plancher de chargement selon une des revendications 1 à 8, **caractérisé en ce qu'**il est prévu, sur le châssis inférieur (3), des paliers à glissement pour des arbres (5) ou similaires, qui sont reliés au châssis supérieur (6).

10. Plancher de chargement selon la revendication 9, **caractérisé en ce que** les paliers à glissement sont des paliers à billes linéaires (4a) qui sont encastrés dans des boîtiers linéaires (4) fixés sur le châssis supérieur (6).

11. Plancher de chargement selon une des revendications 1 à 10, **caractérisé en ce que**, sur la face inférieure des pièces de châssis latérales du châssis supérieur (6), sont fixés à chaque fois deux arbres (5), notamment à l'aide de supports d'arbres (5a) ou similaires.

12. Plancher de chargement selon une des revendications 5 à 11, **caractérisé en ce que** le mandrin d'avance (3b) s'appuie sur la face inférieure du châssis inférieur (3) dans au moins un support de palier à glissement (3c) et au moins un palier de mandrin (3d).

13. Plancher de chargement selon une des revendications 1 à 12, **caractérisé en ce qu'**il est prévu au moins trois engrenages à vis sans fin (1) reliés au châssis inférieur (3).

14. Plancher de chargement selon une des revendications 1 à 13, **caractérisé en ce que** le châssis inférieur (3) est composé de profilés notamment en forme de U.

15. Plancher de chargement selon une des revendications 1 à 14, **caractérisé en ce que** le châssis supérieur (6) est une pièce de tôle estampée ou similaire qui est pourvue de préférence d'une percée.

16. Plancher de chargement selon une des revendications 1 à 15, **caractérisé en ce que** la plaque (7) s'appuie de manière pivotable sur la zone périphérique avant du châssis supérieur (6).

17. Plancher de chargement selon une des revendications 1 à 16, **caractérisé en ce que** la plaque (7) et le châssis supérieur (6) sont pourvus à des points concordants de points de cassure théorique s'étendant dans le sens transversal du véhicule.
